(19) **Europäisches Patentamt**

**European Patent Office**

**Office européen des brevets**

(11) **EP 1 542 022 A1**

(12) **EUROPEAN PATENT APPLICATION**
published in accordance with Art. 158(3) EPC

(43) Date of publication:
**15.06.2005 Bulletin 2005/24**

(51) Int Cl.[7]: **G01P 13/02**, G01P 5/02

(21) Application number: **03725212.9**

(86) International application number:
**PCT/ES2003/000220**

(22) Date of filing: **16.05.2003**

(87) International publication number:
**WO 2004/008156 (22.01.2004 Gazette 2004/04)**

(84) Designated Contracting States:
**AT BE BG CH CY CZ DE DK EE ES FI FR GB GR HU IE IT LI LU MC NL PT RO SE SI SK TR**

(30) Priority: **10.07.2002 EP 02380157**

(71) Applicants:
• **Luque Canova, Miguel Angel**
  **28250 Torrelodones (ES)**
• **Escobar Carballo, Juan**
  **28250 Torrelodones (ES)**

(72) Inventors:
• **Luque Canova, Miguel Angel**
  **28250 Torrelodones (ES)**
• **Escobar Carballo, Juan**
  **28250 Torrelodones (ES)**

(74) Representative: **Maldonado Jordan, Julia et al**
  **Zuazo, Gauger, Maldonado & Asociados**
  **Raimundo Fernandez Villaverde, 45-1A exterior**
  **28003 Madrid (ES)**

(54) **DEVICE FOR MEASURING THE DIRECTION, SPEED AND DANGER OF THE WIND**

(57)     A device for measuring the direction, speed and hazard of the wind comprising a vertical post (1), a panel (5) associated to said vertical post (1) susceptible to turning up to 360° in relation to the shaft formed by said vertical post (1), and a U-shaped anemometric arrow (6) associated to each side of said panel (5) and susceptible to turning up to 90° in relation to the connection shaft to said panel (5) in response to the speed of the wind; wherein the anemometric arrow (6) of each side of the panel (5) has a weight proportional to the area of the panel (5) according to the following equation:

$$W = 1.416 \times A$$

wherein W is the weight in kg and A is the area of the panel (5) in m$^2$; and it is provided with a flap (10) with an angle in the interior of the side forming the U of the arrow (6), with regard to the edge forming the arrow (6), of between 150° and 160°.

FIG.1

EP 1 542 022 A1

## Description

## FIELD OF THE INVENTION

The object of the present invention is a device for measuring the direction, speed and hazard of the wind.

## BACKGROUND OF THE INVENTION

Devices for knowing the direction of the wind have been known since ancient times. The most traditional devices are wind vanes, consisting in their simplest form of a horizontal arrow susceptible to turning 360° on a vertical shaft, such that the arrow will be placed in the direction in which the wind is blowing at all times. Other, somewhat more sophisticated forms include indications of the cardinal point (N, S, E, W, i.e. north, south, east and west) from where the wind is blowing and, where applicable, decorative figures making the wind vane more pleasant to the eye. Wind vanes are widely used simple and economical devices, but they do not allow measuring the speed of the wind, nor the hazard the wind may entail, particularly for those persons exposed to it.

More recently, since the 1930s, other devices have been developed which allow not only knowing the direction of the wind, but which also allow measuring its speed. These are the so-called "windsocks", frequently placed in airports and on highways. A windsock consists of a hollow body of a flexible material and generally tubular shape, the diameter of which progressively decreases from the opening forming the wind's entrance (which is permanently kept open by means of a metallic ring or a ring of another rigid material) to the opposite end. The windsock must be hanged, at its opening, from a vertical support, such that in calm conditions, it hangs downwards due to its own weight. When the wind blows and penetrates into the opening forming the entrance, the gust of wind makes the windsock lift up proportionally to the wind speed. However, windsocks have numerous drawbacks. Firstly, they significantly suffer due to exposure to the wind and to the inclemency of the weather, for which reason they need to be frequently repaired or replaced, and this entails a high cost. Secondly, their positioning requires a certain technique and, in practice, it is many times incorrect, since they are hung too vertically, which limits or even completely prevents them from complying with their function. Thirdly, windsocks provide information concerning wind speed only to specialists, such that the general public cannot accurately know the wind speed. Furthermore and fourthly, the slope of the windsock indicates the wind speed only approximately and in knots, which requires, even for specialists, converting the approximate speed measured into more operative and frequent magnitudes used today, such as km/h. Fifthly and finally, windsocks do not provide an immediate indication concerning the hazard the wind entails, rather it is necessary to deduce this from the speed thereof.

A device intended for solving these problems has been disclosed in Spanish utility model application number U 200001420, of one of the inventors of the present invention. However, the invention disclosed therein does not entirely fulfill its task, since said device can be easily destroyed by the force of the wind, and, furthermore, it may not function if the arrow exerts either too high or too little resistance to the wind.

On the other hand, neither wind vanes nor the device disclosed in the Spanish utility model application number U 200001420 suitably indicate the direction of the wind when contemplated from above, since, particularly, the small width of the arrows of the wind vanes and of the corresponding panel of said device makes them scarcely visible from that upper position. Windsocks do not completely solve this problem either, mainly because of their too frequently incorrect positioning and their relative fragility, making them often become frayed. This problem is particularly a drawback in the case of gliders, ultralites, delta wings, light planes and other apparatus for low-altitude flight, the pilots or crew of which may need to immediately know the direction of the wind.

It is therefore necessary to have a device which allows measuring, at the same time and effectively, the direction, speed and hazard of the wind, which is economical, long-lasting and easy-to-place, and which precisely and immediately indicates to non-specialists the three indicated variables. Furthermore, there is a need for a device which allows knowing the direction of the wind when the device is contemplated from a higher position.

## SUMMARY OF THE INVENTION

The object of the present invention is a device for measuring the direction, speed and hazard of the wind, comprising a vertical post, a panel associated to said vertical post susceptible to turning up to 360° in relation to the shaft formed by said vertical post and a U-shaped anemometric arrow associated to each side of said panel and susceptible to turning 90° in relation to the connection shaft to said panel in response to the wind speed, wherein the anemometric arrow of each side of the panel, preferably made of aluminum, has a weight proportional to the area of the panel according to the equation $W = 1.416 \times A$, wherein W is the weight of the arrow in kg and A is the area of the panel in $m^2$, and it is provided with a flap with an angle in the interior of the side forming the U of the arrow, with regard to the edge forming the arrow, of between 150° and 160°.

In one embodiment, the device is installed by means of a flat stabilization plate.

The panel preferably has a quadrangular shape and has on at least one of its sides, means for the precise indication of the hazard of the wind, consisting of a division into zones, susceptible to being indicated by the corresponding anemometric arrow, indicating the different wind hazard levels, such as three generally triangular zones, preferably colored with green, yellow and red, according to the degrees of hazard of the wind. Even more preferably, the upper angle of each one of the zones is approximately 30°, and in the outer limits of the panel, wind speeds in km/h, miles/h, knots or other units of measure are indicated.

Preferably, the vertical post is a galvanized steel tube, and the panel associated thereto is formed by two aluminum sheets. Also preferably, the two anemometric arrows are connected to one another by means of a stainless steel needle or shaft with a low friction index which passes through the panel, and which can be held by respective bushings.

In one embodiment, the panel is 400 mm x 400 mm, the post is 2 m tall, each one of the anemometric arrows is between 0.2 cm and 0.25 cm and weighs 160 g.

In another embodiment, the panel is 1200 mm x 1200 mm, the post is 4.2 m tall, each one of the anemometric arrows is between 0.85 cm and 0.9 cm and weighs 460 g.

In a preferred embodiment, the device comprises an upper plate associated to the panel, which allows seeing the direction of the wind from above. Said upper plate can be made of a thermoplastic resin, can be 400 x 200 mm, or 1200 x 400 mm, and can be 4 mm thick.

Preferably, the device is provided with a structure associated to the upper part of the post, indicator of the four cardinal points.

**BRIEF DESCRIPTION OF THE DRAWINGS**

The previous summary of the invention, as well as the following detailed description thereof, will be better understood when being read together with the attached drawings, which, with an illustrative and non-limiting character, show the following:

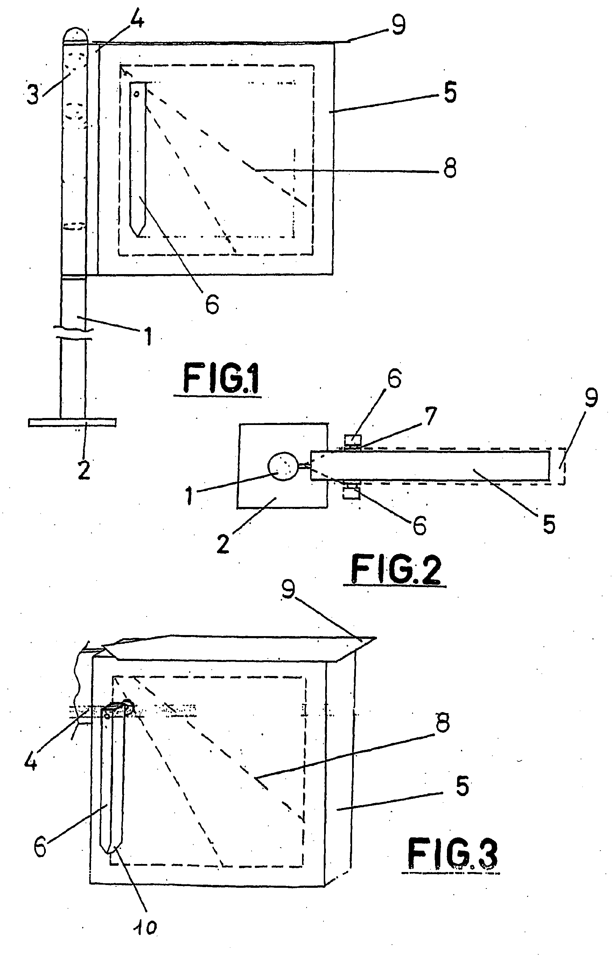

> Figure 1 shows an elevational view of a device of the present invention.
> Figure 2 shows an upper plan view of the device of figure 1.
> Figure 3 shows a perspective view of part of the device of figures 1 and 2.

**DETAILED DESCRIPTION OF AN EMBODIMENT OF THE INVENTION**

In reference to the figures, the device of the invention is basically constituted of a post 1, a panel 5 associated to said post 1 and an arrow 6 associated to said panel 5 on each side thereof.

The post 1 must be perfectly vertical and, for such purpose, can preferably be secured to a stabilization plate 2, adapted for fixing thereof to the ground or any other base. This stabilization plate 2 can be a commercially available flange.

The post 1 must be capable of resisting the force of the wind and holding the panel 5. For this, it will advantageously be a hollow galvanized steel tube. The post 1 can end in its upper portion in a machined galvanized steel bushing, provided with a hollow cylindrical rod, advantageously threaded on part of its length in order to allow placing a galvanized steel marker or dome supporting a structure (not shown) indicating the four cardinal points.

A panel 5 is associated to the post 1 by means known in the art, such that the panel 5 can turn 360° in relation to the vertical shaft defined by the post 1, in response to the thrust of the wind, such that the orientation of said panel 5 expresses the direction of the wind. A means for connecting the panel 5 to the post 1 can be a bushing 3 susceptible to free rotation with regard to the shaft of the post by virtue of suitable low friction index bearings (known in the art and not specifically shown). The bushing 3 is generally cylindrical in shape and is integrally connected at a position of the plate 4, extending according to an edge of the generally cylindrical shaped bushing 3, so that said connection plate 4 can also adopt a perfectly vertical position when the assembly is in its operative state. Preferably, the plate 4 will have a length equal to that of the panel 5.

The panel 5 preferably has a quadrangular shape, since this allows providing it with a sufficiently visible surface on which, as will be seen, it is possible to introduce indications related to the speed of the wind and the hazard produced as a result thereof. The panel 5 must be able to be seen at least up to speeds of 100 and 200 km/h. This can be achieved with a panel 5 of between approximately 400 x 400 mm and 1200 x 1200 mm, and it can be suitably supported by a post 1 of between 2 and 4.2 m.

A panel 5 having suitable resistance can be made from two rigid, light, and closed-structured aluminum plates joined together.

A U-shaped anemometric arrow 6 is associated to each one of the sides of the panel 5 such that it vertically hangs in a pivoting manner from suitable means, such as a stainless steel needle or shaft with a low friction index which transversely passes through the panel 5 and which is housed in a bushing 7 (which can be seen specifically in figure 2). The anemometric arrow 6 is advantageously made of aluminum and preferably hangs from the upper area of the panel 5 near the post 1 (at a distance of between approximately 40 mm and 160 mm from the upper edge of the panel 5), such that it can turn parallelly to the surface of the panel 5, up to a maximum of 90°, in response to the intensity of the wind. The weight of each anemometric arrow 6 depends on the size of the panel 5 and can be from 160 g for a 400 x 400 mm panel 5, up to 460 g for a 1200 x 1200 mm panel 5. For optimal operation, the weight of each arrow 6 must be proportional to the area of the panel 5 according to the following equation:

$$W = 1.416 \times A$$

where W is the weight in kg and A is the area of the panel 5 in $m^2$. It is essential for the arrow 6 to provide sufficient resistance to the wind so that the latter does not make it turn more than 90°, but not so much resistance that it only permits a minimum shifting. It is also essential for the flap 10 forming the tip of the arrow to have an angle in the interior of the side forming the U of the arrow 6, with regard to the edge forming the arrow 6, of between 150° and 160°, such that it provides suitable resistance to the wind. Naturally, in calm conditions, with absence of wind, the anemometric arrow 6 adopts a vertical, fallen position. Otherwise, the anemometric arrow 6 will move in a pivoting manner with its free end farthest from the post 1 as the speed of the wind increases, turning up to a maximum of 90°, as indicated.

The turning of the anemometric arrow 6 is, in and of itself, an indication of the velocity and intensity of the wind, and, therefore, of its hazard, but, very preferably, the panel 5 is provided with precise indication means 8 for indicating the hazard of the wind. Specifically, said indication means 8 for indicating the hazard of the wind consist of a division into zones, susceptible to being indicated by the corresponding anemometric arrow 6, indicating the different hazard levels of the wind. Thus, the zone closest to the post 1 indicates the lesser hazard of the wind, the intermediate zone, adjacent to it, indicates a greater hazard of wind, and the end zone, farthest from the post, indicates a high hazard level of the wind. Very advantageously, said zones are colored with conventional colors indicative of different hazard levels. Thus, the zone closest to the post 1 will be colored in green, the intermediate zone in yellow, and the zone farthest from the post 1 in red or a color similar to red. The limit between the zone which can preferably be colored in green and the zone which can preferably be colored in yellow corresponds to a wind speed of 25 km/h (which is approximately the wind speed at which a vehicle undergoes a thrust upon entering into the draft of another vehicle), and the limit between the zone which can preferably be colored in yellow and the zone which can preferably be colored in red corresponds to a wind speed of 60 km/h. This second speed has been chosen as it is close to 70 km/h, which is the speed at which a person weighing approximately 75 kg in body weight cannot walk in an erect position against the wind. These speeds (not specifically indicated in the figures) can preferably be indicated in the part corresponding to the outer limit of the panel 5. If so desired, other wind speeds could be indicated in the same zone as well. All the indications in question can be in km/h, miles/h, in knots, in combinations of said measurement systems, or in others. In a preferred embodiment, since it allows optimal vision of the panel 5 and immediate perception of the hazard of the wind, the upper angle of each one of the zones indicated is approximately 30°.

The green, yellow and red paint of the panel 5 can be, advantageously, a sticker which can be obtained on the market with the 3M trademark, since this sticker is able to resist, for a long time, the inclemency of the weather, and can easily be installed on the panel 5.

According to tests carried out by the inventors with devices carried out with the indicated materials and sizes, a device can be obtained for measuring the direction, speed and hazard level of the wind capable of resisting wind speeds of up to 190 km/h.

In a preferred embodiment, the device of the invention is provided with an upper plate 9 which allows, with the observation from above of the device of the invention, determining the direction of the wind. It is advantageously a thermoplastic material plate, generally rectangular, the dimensions of which can range between 400 x 200 mm and 1200 x 400 mm. The thickness thereof can be 4 mm. The upper plate 9 can be associated to the rest of the device by any conventional means known in the art (for example, by means of its being adhered to the upper part of the panel 5 by means of suitable adhesives).

Persons skilled in the art will understand that modifications can be introduced in the described embodiment, without departing from the essential nature of the invention. For example, other precise identification means 8 for identifying the hazard of the wind other than zones marked with different colors can be introduced. Or the panel 5 could have a shape other than quadrangular. Likewise, the means allowing the rotation of the panel 5 could vary, and modifications in the pivoting system of the anemometric arrow 6 could also be introduced. Likewise, although disadvantageously, there could be a single anemometric arrow 6 on one of the sides. It is expected that said modifications remain within the scope of the invention and, therefore, the claims must be observed more than the foregoing description for defining the scope of the invention.

The present invention is applicable, among others, in airports, ports, expressways, bridges, highways, factories, nuclear power plants, refineries, maritime platforms, canals, mountain peaks, railroad tracks, dumps, cable railways, agricultural facilities, airfields and other areas where sport is practiced (such as jumping, running, rowing, sailing, skiing, gliding, tennis, skeet shooting, golf, mountaineering, hang gliding, bungee jumping, cycling, etc.), as well as, in general, wherever the impact of the wind may entail a direct hazard for people, animals or things, or wherever there is a hazard caused by other elements which are a function of the wind (for example, the sea).

**Claims**

1. A device for measuring the direction, speed and hazard of the wind, comprising:

   a) a vertical post (1);
   b) a panel (5) associated to said vertical post (1) susceptible to turning up to 360° in relation to the shaft formed by said vertical post (1); and
   c) a U-shaped anemometric arrow (6) associated to each side of said panel (5) and susceptible to turning up to 90° in relation to the connection shaft to said panel (5) in response to the speed of the wind;

   wherein the anemometric arrow (6) of each side of the panel (5) :

   - has a weight proportional to the area of the panel (5) according to the following equation:

   $$W = 1.416 \times A$$

   where W is the weight in kg and A is the area of the panel (5) in m$^2$;
   - and is provided with a flap (10) with an angle in the interior of the side forming the U of the arrow (6), with regard to the edge forming the arrow (6), of between 150° and 160°.

2. A device for measuring the direction, speed and hazard of the wind according to claim 1, also comprising a flat stabilization plate (2) on which the vertical post is installed.

3. A device for measuring the direction, speed and hazard of the wind according to any of the previous claims, wherein the panel (5) has a quadrangular shape.

4. A device for measuring the direction, speed and hazard of the wind according to any of the previous claims, wherein the panel (5) has at least on one of its sides, precise indication means (8) of the hazard of the wind, consisting of a division into zones, susceptible to being indicated by the corresponding anemometric arrow (6), indicating the different hazard levels of the wind.

5. A device for measuring the direction, speed and hazard of the wind according to claim 4, wherein the panel (5) has on its two sides a division into zones, susceptible to being indicated by the corresponding anemometric arrow (6), indicating the different hazard levels of the wind.

6. A device for measuring the direction, speed and hazard of the wind according to claim 4 or 5, wherein the division of the panel (5) is into three generally triangular zones.

7. A device for measuring the direction, speed and hazard of the wind according to claim 6, wherein the zone indicating the lesser hazard of the wind is colored in green, the zone indicating intermediate hazard of the wind is colored in yellow, and the zone indicating the high hazard of the wind is colored in red.

8. A device for measuring the direction, speed and hazard of the wind according to any of claims 6 or 7, wherein each one of the three zones indicated has an angle exceeding approximately 30°.

9. A device for measuring the direction, speed and hazard of the wind according to any of claims 4 to 8, wherein each limit of the indicated zones has a numerical indication of the speed of the wind.

10. A device for measuring the direction, speed and hazard of the wind according to claim 9, wherein the numerical indication is only in knots.

11. A device for measuring the direction, speed and hazard of the wind according to claim 9, wherein the numerical indication is only in km/h.

12. A device for measuring the direction, speed and hazard of the wind according to claim 11, wherein the limit between the zone closest to the post (1) and its contiguous zone corresponds to 25 km/h, and the limit between the latter and the zone farthest from the post (1) corresponds to 50 km/h.

13. A device for measuring the direction, speed and hazard of the wind according to claim 9, wherein the numerical indication is only in miles/h.

14. A device for measuring the direction, speed and hazard of the wind according to claim 9, wherein the numerical indication is in knots and in km/h, in knots and in miles/h, and/or in km/h and miles/h.

15. A device for measuring the direction, speed and hazard of the wind according to any of the previous claims, wherein the vertical post (1) is a galvanized steel tube and the panel (5) associated thereto is formed by two aluminum sheets.

16. A device for measuring the direction, speed and hazard of the wind according to any of the previous claims, wherein each anemometric arrow (6) is made of aluminum.

17. A device for measuring the direction, speed and hazard of the wind according to any of the previous claims, wherein the two anemometric arrows (6) are connected to one another by means of a stainless steel needle or shaft with a low friction index which passes through the panel (5).

**18.** A device for measuring the direction, speed and hazard of the wind according to claim 17, wherein the needle is held by respective bushings.

**19.** A device for measuring the direction, speed and hazard of the wind according to any of claims 15 to 18, wherein the panel (5) is 400 x 400 mm, the post (1) is 2 m in height, each one of the anemometric arrows (6) is between 0.2 and 0.25 cm and weighs 160 g.

**20.** A device for measuring the direction, speed and hazard of the wind according to any of claims 15 to 18, wherein the panel (5) is 1200 x 1200 mm, the post (1) is 4.2 m in height, each one of the anemometric arrows (6) is between 0.85 and 0.9 cm and weighs 460 g.

**21.** A device for measuring the direction, speed and hazard of the wind according to any of the previous claims, further comprising an upper plate (9), associated to the panel (5), which allows seeing the direction of the wind from a position above said device.

**22.** A device for measuring the direction, speed and hazard of the wind according to claim 21, wherein the upper plate (9) is 400 x 200 mm and is 4 mm thick.

**23.** A device for measuring the direction, speed and hazard of the wind according to claim 21, wherein the upper plate (9) is 1200 x 400 mm and is 4 mm thick.

**24.** A device for measuring the direction, speed and hazard of the wind according to claims 21 to 23, wherein the upper plate (9) is made of thermoplastic resin.

**25.** A device for measuring the direction, speed and hazard of the wind according to any of the previous claims, wherein the device is provided with a structure associated to the upper part of the post (1), indicator of the four cardinal points.

FIG.1

FIG.2

FIG.3

| **INTERNATIONAL SEARCH REPORT** | International application No. |
|---|---|
| | PCT/ES/03/00220 |

| A. | CLASSIFICATION OF SUBJECT MATTER |
|---|---|

**Int. cl7    G01P13/02, 5/02**

According to International Patent Classification (IPC) or to both national classification and IPC

| B. | FIELDS SEARCHED |
|---|---|

Minimum documentation searched (classification system followed by classification symbols)

**Int. cl7    G01P13/02, 5/02**

Documentation searched other than minimum documentation to the extent that such documents are included in the fields searched

Electronic data base consulted during the international search (name of data base and, where practicable, search terms used)

**EPODOC, WPI, PAJ, OEPMPAT**

C.    DOCUMENTS CONSIDERED TO BE RELEVANT

| Category* | Citation of document, with indication, where appropriate, of the relevant passages | Relevant to claim No. |
|---|---|---|
| Y | ES 1050736 U (LUQUE) 16.05.2002, **the whole document** | 1-25 |
| Y | US 2749751 A (HASTINGS) 12.06.1956, **column 1, line 70-column 3, line 40; figures 1, 2, 5** | 1-25 |
| Y | US 2491176 A (HAMMOND) 13.12.1949, **column 2, lines 4-59; fig.1,5** | 25 |
| A | GB 277914 A (DEHAVILLAND) 29.09.1927, **page 2, line 29-59; figures** | 1 |
| A | FR 2624616 A (GIRAUD) 16.06.1989, **the whole document** | 1 |
| Y | US 4389887 A (HOWLETT ) 28.06.1983, **column 2, lines 14-35; fig. 2,4** | 1,4,5,9-14,17,18 |
| Y | US 2700899 A (MYERS) 01.02.1955, **column 2, lines 47-49; figure 1** | 1,4,5,9-14,17,18 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| **26 August 2003 (26.08.03)** | **15 September 2003 (15.09.03)** |

| Name and mailing address of the ISA/ | Authorized officer |
|---|---|
| **S.P.T.O.** | |
| Facsimile No. | Telephone No. |

Form PCT/ISA/210 (second sheet) (July 1992)

**INTERNATIONAL SEARCH REPORT**

Information on patent family members

International Application No

PCT/ES/03/00220

| Patent document cited in search report | Publication date | Patent familiy member(s) | Publication date |
|---|---|---|---|
| ES 1050736 U | 16.05.2002 | NONE | |
| US 2749751 A | 12.06.1956 | NONE | |
| US 2491176 A | 13.12.1949 | NONE | |
| GB 277914 A | 29.09.1927 | NONE | |
| FR 2624616 A | 16.06.1989 | NONE | |
| US 4389887 A | 28.06.1983 | NONE | |
| US 2700899 A | 01.02.1955 | NONE | |

Form PCT/ISA/210 (patent family annex) (July 1992)